Europäisches Patentamt

(19) European Patent Office

Office européen des brevets

(11) Publication number: **0 146 777**
**B1**

(12) **EUROPEAN PATENT SPECIFICATION**

(45) Date of publication of patent specification: **19.07.89**

(51) Int. Cl.⁴: **H 04 N 9/64**

(21) Application number: **84113938.9**

(22) Date of filing: **17.11.84**

(54) **Pal-secam identification arrangement.**

(30) Priority: **24.11.83 GB 8331430**

(43) Date of publication of application:
**03.07.85 Bulletin 85/27**

(45) Publication of the grant of the patent:
**19.07.89 Bulletin 89/29**

(84) Designated Contracting States:
**DE FR IT NL**

(56) References cited:
**GB-A-2 117 207**

**ELECTRONIQUE APPLICATIONS, no. 27,
December 1982- January 1983, pp. 15-23,
AMSTERDAM (NL), "Décodeur PAL/SECAM en
circuits intégrés"**

(73) Proprietor: **MOTOROLA, INC.
1303 East Algonquin Road
Schaumburg Illinois 60196 (US)**

(72) Inventor: **Gay, Michael John
19 Chemin de la Source Coppet
CH-1296 Vaud (CH)**
Inventor: **Gutmann, Johannes
12 Chemin du Lac Commugny
CH-1291 Vaud (CH)**

(74) Representative: **Ibbotson, Harold et al
Motorola Ltd Patent and Licensing Operations -
Europe Jays Close Viables Industrial Estate
Basingstoke Hampshire RG22 4PD (GB)**

Courier Press, Leamington Spa, England.

**Description**

This invention relates to a PAL-SECAM identification arrangement for use in a multi-standard colour TV receiver.

Television receivers which are equipped to receive both PAL and SECAM system transmissions are often provided with some automatically operating means for recognising whether received signals are PAL or SECAM signals and for setting the colour processing circuits accordingly.

The above means comprises so-called identification circuits located in the PAL and SECAM chroma decoding circuits. Usually the PAL identification circuit inhibits the operation of the PAL chroma circuit unless PAL system transmissions are recognised and likewise the SECAM identification circuit inhibits the operation of the SECAM chroma circuit unless SECAM system transmissions are recognised.

In both PAL and SECAM systems it is necessary to provide a commutation of the colour decoding circuits at half the horizontal scan frequency in phase synchronism with a commutation of the encoding at the transmitter.

For example, as is well known, in the SECAM system, in one horizontal line the signal R—Y is transmitted whilst in the next line the signal B—Y is transmitted. In the PAL system both R—Y and B—Y signals are transmitted during each horizontal scan line, but the phase of one of the signals, (R—Y) is reversed each line.

The colour decoding circuits must in the case of SECAM transmission be adapted to be in the correct state to decode the R—Y signal when that appears and, the B—Y signal when that appears. In the case of PAL transmissions the decoding circuits need to be in the correct state to match the phase of the phase alternating signal.

The identification circuits operate in response to transmitted identification signals which are alternated to give the required phase information. The identification signals are transmitted at the beginning of each line and in the case of SECAM transmissions during the frame interval.

The PAL and SECAM identification circuits decode the transmitted identification signals and adapt the colour decoding circuits accordingly. One method of adapting the decoding circuits is to use the output of the identification circuits to set a bistable in the decoding circuits.

Identification circuits as described above are known and available in integrated circuit form as part of Motorola TDA 3300 in the case of the PAL system and as part of the Motorola TDA 3030 in the case of the SECAM system.

Problems can occur in television receivers fitted with the above described identification circuits because of deficiencies in the received television signal, or in the receiver itself. Such deficiencies may result in a SECAM identification circuit responding to a PAL signal and vice versa.

It is possible that the spurious response of the identification circuit may be sufficient to cause the circuit completely to misidentify the signal.

Misidentification may be particularly likely where the commutation of the correct decoding circuit happens to be initially in antiphase with that of the signal, or if, for some reason, priority to operation in one or other broadcast system had been assigned.

Known multistandard television receivers are prone to misidentification of received signals as it is usual to compare the output of an identification circuit with a reference level to evaluate a received signal. Since the identification circuit has to recognise very degraded and weak correct signals it may readily respond to slightly degraded but strong incorrect signals.

A PAL-SECAM identification arrangement in accordance with the prior art portion of claim 1 is disclosed in Electronique Applications No. 27, December 1982 January 1983, pages 15—23.

This invention seeks to provide a PAL-SECAM identification arrangement in which the problem of signal misidentification associated with the above described known circuits is mitigated.

These problems are solved by providing common integrating means coupled to the outputs of the first and second identification means and having an output for providing a signal representative of the sum of the output signals of the first and second identification means and comparative means for comparing a potential fed from the output of the common integrating means with a plurality of reference potentials and for providing output signals for indicating reception of a correctly phased PAL encoded signal, for inverting the phase of the commutation of the SECAM colour decoding means, for inverting the phase of the commutation of the PAL colour decoding means and for indicating reception of a correctly phased SECAM encoded signal.

The common integrating means may comprise capacitive means coupled between the outputs of the first and second identification means and a supply terminal.

The comparative means may comprise four comparators, each for comparing the potential fed from the output of the common integrating means with a respective reference potential and for providing a respective one of the output signals of the comparative means.

Means may be provided for applying a bias potential to the output of the common integrating means whereby in the absence of output signals from the first and second identification means none of the four comparators provides an output signal.

Typically, first and second of the four comparators provide outputs in response to excursions in a first sense, by first and second amounts respectively, of the potential fed from the common integrating means, from the bias potential ($V_3$), the second amount being smaller than the first amount; the third and fourth comparators providing outputs in response to excursions in a second sense, by third and fourth amounts respectively, of the potential fed form the common integrating means, from the bias potential ($V_3$), the third

amount being smaller than the fourth amount.

In one embodiment of the invention each of the four comparators has first and second inputs, the first inputs of the first and second comparators and the second inputs of the third and fourth comparators being coupled to the output of the common integrating means, and the second inputs of the first and second comparator and the first inputs of the third and fourth comparator being coupled to means for supplying respective reference potentials.

An exemplary embodiment of the invention will now be described with reference to the drawings in which;

Figure 1 shows a schematic illustration of a PAL-SECAM identification arrangement in accordance with the present invention and

Figure 2 is an explanatory waveform diagram illustrating the operation of the arrangement of Figure 1.

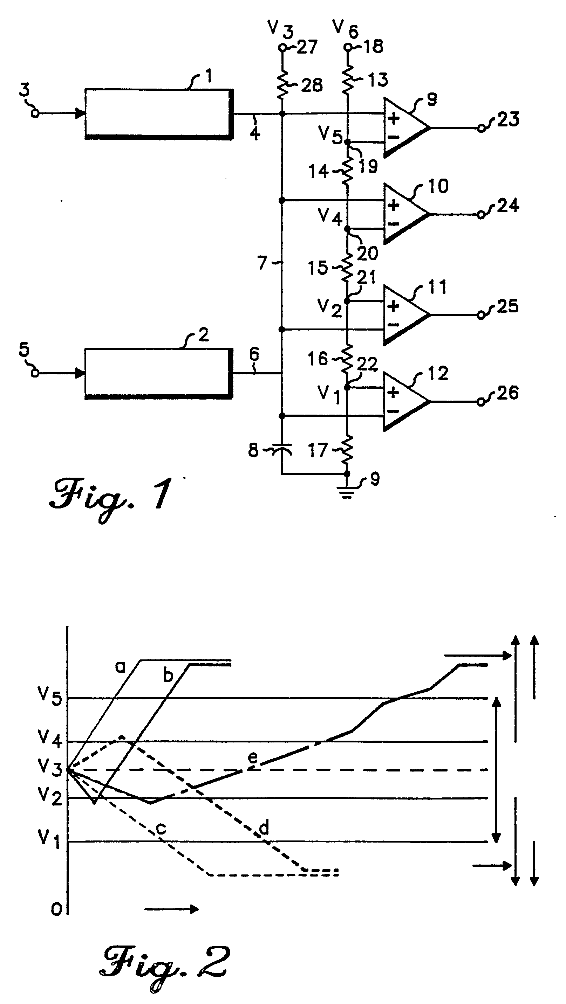

Referring now to Figure 1 the illustrated arrangement includes a PAL identification circuit 1 and a SECAM identification circuit 2. The PAL identification circuit 1 has an input 3 for receiving a colour television signal and an output 4. The SECAM identification circuit has an input 5 for receiving a colour television signal and an output 6. Both the PAL and SECAM identification circuits have other inputs (not shown) for gating and timing signals etc. These inputs play no part in the present invention. The identification circuits 1 and 2 may be of the type previously mentioned and commercially available as part of the Motorola TDA3300 and 3030 integrated circuits respectively. The outputs 4 and 6 of the PAL and SECAM identification circuits 1 and 2 respectively are coupled together at a node 7 and to one terminal of integrating means in the form of a capacitor 8 whose second terminal is connected to a supply terminal 9, typically an earth terminal.

The node 7 which also forms the output of the integrating means is coupled to comparative means provided by four comparators 9, 10, 11 and 12. The comparators 9 and 10 have their first and non-inverting inputs coupled to the node 7 whilst the comparators 11 and 12 have their second and inverting inputs coupled to the node 7. Reference potentials for the comparators 9, 10, 11 and 12 are provided by a potential divider chain formed by resistors 13, 14, 15, 16 and 17 which are connected in series between a supply terminal 18 and the earth terminal 9.

The second and inverting input of the comparator 9 is coupled to the potential divider chain at a terminal 19 between the resistors 13 and 14.

The second and inverting input of the comparator 10 is coupled to the potential divider chain at a terminal 20 between the resistors 14 and 15. The first and non-inverting input of the comparator 11 is coupled to the potential divider chain at a terminal 21 between the resistors 15 and 16 whilst the first and non-inverting input of the comparator 12 is coupled to the potential divider chain at a terminal 22 between the resistors 16 and 17. The comparators 9, 10, 11 and 12 have output terminals 23, 24, 25 and 26 respectively.

In operation a potential $V_6$ is applied to the potential divider chain at the terminal 18 and a potential $V_1$ will appear at the terminal 22 a potential $V_2$ at the terminal 21, a potential $V_4$ at the terminal 20 and a potential $V_5$ st the terminal 19. A further supply terminal 27 is coupled to the node 7 via a resistor 28 and a potential $V_3$ which lies between the values of the potentials $V_2$ and $V_4$ is applied to the terminal 27 so that in a quiescent condition i.e. in the absence of any output signals at the output terminals 4 and 6 of the identification circuits 1 and 2 respectively, the node 7 will also acquire the potential $V_3$.

Assume that in response to a PAL encoded signal applied at the input terminal 3, the PAL identification circuit 1 will produce at its output 4 an output signal in the form of unidirectional current pulses having s first sense when the PAL colour decoder and the received PAL encoded signal are commutated in correct phase synchronism with one another and in a second sense e.g. opposite to the first sense when the PAL colour decoder is not commutated in correct phase synchronism with the received PAL encoded signals.

It is also assumed that in response to a SECAM encoded signal applied to the input terminal 5 the SECAM identification circuit 2 will produce at its output terminal 6 an output signal in the form of unidirectional current pulses having the second sense when the SECAM colour decoder and the received SECAM encoded signals are commutated in phase synchronism with one another and of the first sense when the SECAM colour decoder is not correctly commutated with respect to the phase of commutation of the received signals.

In the absense of PAL or SECAM input signals to the identification circuits 1 and 2 no average output current is produced at the output terminals 4 and 6.

Further operation of the arrangement of Figure 1 will now be described in conjunction with the waveform diagram of Figure 2 which shows the potential on the capacitor 8 at the node 7 i.e. the potential at the output of the integrating means as a function of time. The reference potentials $V_1$, $V_2$, $V_3$, $V_4$ and $V_5$ are indicated in Figure 2 by horizontal lines.

If an ideal PAL encoded signal with commutation correctly phased with that of the PAL colour decoder, is applied to the input terminal 3 of the PAL identification circuit 1 then output current pulses of the first sense will appear at the output terminal 4 and will be integrated by the capacitor 8 causing the potential at the node 7 to change from the bias value $V_3$. For the purposes of explanation it will be assumed that current pulses of the first sense caused the potential at the node 7 to rise.

When the potential at the node 7 rises above that of the threshold potential $V_5$ applied to the inverting input of the comparator 9, the comparator 9 will provide an output signal at its output terminal 23 indicating the reception of a correctly phased PAL encoded signal. This is illustrated by waveform *a* in Fig. 2.

If an ideal PAL encoded signal with incorrectly phased commutation is applied to the input terminal 3 of the PAL identification circuit 1 output current pulses of the second sense will appear at the output terminal 4 and after integration by the capacitor 8 the potential at the node 7 will fall from the value $V_3$ of the bias potential.

When the potential at the node 7 falls below the value of the reference potential $V_2$ applied to the non-inverting input of the comparator 11, the comparator 11 will provide an output signal at its output terminal 25. This output signal is utilised to invert the phase of the commutation of the PAL colour decoder.

The phases of the commutation of the PAL decoder and the received PAL encoded signal will now be the same so that the output current pulses appearing at the output terminal 4 of the PAL identification circuit 1 will once again flow in the first sense causing the potential at the node 7 to rise. This potential will continue to rise until it reaches the value of the threshold potential $V_5$ at which time the comparator 9 will once again provide an output signal at its output terminal 23 indicating the reception of a correctly phased PAL encoded signal. This is illustrated by wave form *b* in Figure 2.

The response of the arrangement of Figure 1 to ideal SECAM encoded signals with correctly and incorrectly phased commutation will be analogous to the operation described for the PAL signals and is represented by the wave forms *c* and *d* in Figure 2. The response of the arrangement to a non-ideal incorrectly commutated PAL encoded signal will now be described.

The non-ideal PAL signal is assumed to produce output current pulses from both the PAL identification circuit 1 and the SECAM identification circuit 2. It is further assumed that the output from the SECAM identification circuit 2 is initially in such sense as to cause the potential at the node 7 to fall.

Initially therefore the potential at the node 7 falls due to the integration by the capacitor 8 of the output signals from the PAL and SECAM identification circuits 1 and 2. When the potential at the node 7 has fallen below that of the threshold potential $V_2$, the comparator 11 produces an output signal at its output 25 which causes the sense of commutation of the PAL colour decoder to invert.

Assuming that the output signal provided by the PAL identification 1 exceeds that from the SECAM identification circuit 2 the potential at the node 7 will tnereafter rise. When the potential at the node 7 exceeds the value of the threshold potential $V_4$ the comparator 10 will produce an output signal for inverting the phase of commutation of the SECAM decoder.

The rate rise of the potential at the node 7 will then increase because the output currents provided by the PAL and SECAM identification circuits will have the same sense and will be summed by the capacitor 8.

Since the potential at the node 7 however remains above that of the threshold potential $V_4$ an output signal will continue to be provided by the comparator 10 causing periodic inversion of the phase of commutation of the SECAM colour decoder. The rate of rise of the potential at the node 7 will therefore alternate between the initial and higher values.

The comparator 9 will indicate the reception of a correctly phased PAL encoded signal when the potential at the node 7 rises above that of the threshold potential $V_5$. This operstion is indicated by the wave form *e* in Figure 2.

The arrangement will function in a similar manner in response to a correctly commutated non-ideal PAL signal and also in response to correctly or incorrectly commutated non-ideal SECAM signals.

Correct phasing and identification of received signals will be obtained from the arrangement provided that a received signal produces an output signal from the correct identification circuit which surpasses any produced from the incorrect identification by an amount sufficient to charge the capacitor 8 to a potential which is adequate for providing an output signal from the appropriate comparator 9, 12. The actual value of the output signal required to achieve this result depends upon the values of the threshold potentials $V_1$, $V_2$, $V_4$ and $V_5$ and upon the value of the resistor 28.

The embodiment illustrated in Figure 1 is given by way of example and modifications may be made without departing from the scope of the invention. For example the summation and integration of the output signals of the PAL and SECAM identification circuits and the comparison provided by the four comparators may be implemented in any convenient way and if desired by digital methods.

**Claims**

1. A PAL-SECAM identification arrangement for a multistandard colour TV receiver comprising first identification means (1) responsive to a received PAL encoded signal and having an output (4) for providing an output signal of a first sense when PAL colour decoding means is commutated in a desired phase relationship with the commutation of the received PAL encoded signal and of a second sense when the commutation of the PAL colour decoding means is incorrectly phased; second identification means (2) responsive to a received SECAM encoded signal and having an output (6) for providing an output signal of the second sense when SECAM colour decoding means is commutated in a desired phase relationship with the commutation of the received SECAM encoded signal and of the first sense when the commutation of the SECAM colour decoding means is incorrectly phased; characterised by common integrating means (8) coupled to the outputs (4, 6) of the first (1) and second (2) identification means and having an output (7) for providing a signal representative of the sum of the output signals of the first and second identification means and comparative means (9—12) for comparing a potential fed from the output (7) of the common integrating means (8) with a plurality of reference potentials ($V_1$ to $V_5$) and for providing output signals for indicating reception of a correctly phased PAL encoded signal, for inverting the phase of the commutation of the SECAM colour decoding means, for inverting the phase of the commutation of the PAL colour decoding means and for indicating reception of a correctly phased SECAM encoded signal.

2. The arrangement of claim 1 wherein the comparative means comprises four comparators (9 to 12), each for comparing the potential fed from the output of the common integrating means (8) with a respective reference potential ($V_1$ to $V_5$) and for providing a respective one of the output signals of the comparative means.

3. The arrangement of claims 1 or 2 wherein means (28) is provided for applying a bias potential ($V_3$) to the output (7) of the common integrating means (8) whereby in the absense of output signals from the first (1) and second (2) identification means none of the four comparators (9 to 12) provides an output signal.

4. The arrangement of claims 2 and 3 wherein first (9) and second (10) of the four comparators provide outputs in response to excursions in a first sense, by first and second amounts respectively, of the potential fed from the common integrating means, from the bias potential ($V_3$), the second amount being smaller than the first amount; the third (11) and fourth (12) comparators providing outputs in response to excursions in a second sense, by third and fourth amounts respectively, of the potential fed from the common integrating means, from the bias potential ($V_3$), the third amount being smaller than the fourth amount.

5. The arrangement of any preceding claim wherein each of the four comparators (9 to 12) has first and second inputs, the first inputs of the first and second comparators and the second inputs of the third and fourth comparators being coupled to the output of the common integrating means (8), and the second inputs of the first and second comparators and the first inputs of the third and fourth comparators being coupled to means (13—18) for supplying respective reference potentials.

6. The arrangement of any preceding claim wherein the common integrating means comprises capacitive means (8) coupled between the outputs (4, 6) of the first (1) and second (2) identification means and a supply terminal.

**Patentansprüche**

1. PAL-SECAM-Erkennungsanordnung für einen Mehrnormen-Farbfernsehempfänger, enthaltend eine erste Erkennungseinrichtung (1), die auf ein empfangenes PAL-kodiertes Signal anspricht und einen Ausgang (4) aufweist, um ein Ausgangssignal mit einem ersten Vorzeichen abzugeben, wenn eine PAL-Farbdekodiereinrichtung in einem gewünschten Phasenverhältnis mit der Umschaltung des empfangenen PAL-kodierten Signals umgeschaltet wird, und mit einem zweiten Vorzeichen abzugeben, wenn die Umschaltung der PAL-Farbdekodiereinrichtung eine falsche Phase aufweist; eine zweite Erkennungseinrichtung (2), die auf ein empfangenes SECAM-kodiertes Signal anspricht und einen Ausgang (6) aufweist, um ein Ausgangssignal mit dem zweiten Vorzeichen abzugeben, wenn die SECAM-Farbdekodiereinrichtung in einem gewünschten Phasenverhältnis mit der Umschaltung des empfangenen SECAM-kodierten Signals umgeschaltet wird, und mit dem ersten Vorzeichen abzugeben, wenn die Umschaltung der SECAM-Farbdekodiereinrichtung eine falsche Phase aufweist, gekennzeichnet durch eine gemeinsame Integriereinrithtung (8), die mit den Ausgängen (4, 6) der ersten (1) und zweiten (2) Erkennungseinrichtungen verbunden ist und einen Ausgang (7) zum Abgeben eines Signals aufweist, das für die Summe der Ausgangssignale der ersten und zweiten Erkennungseinrichtungen repräsentativ ist, und durch eine Vergleichseinrichtung (9—12) zum Vergleichen eines Potentials, das vom Ausgang (7) der gemeinsamen Integriereinrichtung (8) zugeführt ist, mit mehreren Bezugspotentialen ($V_1$ bis $V_5$) und zum Abgeben von Ausgangssignalen zum Anzeigen des Empfangs eines phasenrichtigen PAL-kodierten Signals und zum Invertieren der phase der Umschaltung der SECAM-Farbdekodiereinrichtung, um die Phase der Umschaltung der PAL-Farbdekodiereinrichtung zu invertieren und den Empfang eines phasenrichtigen SECAM-kodierten Signals anzuzeigen.

2. Anordnung nach Anspruch 1, bei der die Vergleichseinrichtung vier Komparatoren (9—12) umfaßt, jeweils für den Vergleich des vom Ausgang der gemeinsamen Integriereinrichtung (8) gelieferten Potentials mit einem entsprechenden Bezugspotential ($V_1$ bis $V_5$) und zum Abgeben eines entsprechenden der Ausgangssignale der Vergleichseinrichtung.

3. Anordnung nach den Ansprüchen 1 oder 2, bei der eine Einrichtung (28) vorgesehen ist zum Zuführen eines Vorspannungspotentials ($V_3$) zum Ausgang (7) der gemeinsamen Integriereinrichtung (8), wodurch bei Abwesenheit von Ausgangssignalen von den ersten (1) und zweiten (2) Erkennungseinrichtungen keiner der vier Komparatoren (9—12) ein Ausgangssignal liefert.

4. Anordnung nach den Ansprüchen 2 und 3, bei der erste (9) und zweite (10) der vier Komparatoren Ausgänge in Abhängigkeit von Auswanderungen in einem ersten Vorzeichen um erste bzw.

zweite Größen des von der gemeinsamen Integriereinrichtung zugeführten Potentials von dem Vorspannungspotential (V$_3$) liefern, wobei die zweite Größe kleiner als die erste Größe ist; die dritten (11) und vierten (12) Komparatoren Ausgänge in Abhängigkeit von Auswanderungen in einem zweiten Vorzeichen um dritte bzw. vierte Größen des von der gemeinsamen Integriereinrichtung zugeführten Potentials von dem Vorspannungspotential (V$_3$) liefern, wobei die dritte Größe kleiner als die vierte Größe ist.

5. Anordnung nach einem der vorhergehenden Ansprüche, wobei jeder der vier Komparatoren (9—12) erste und zweite Eingänge hat, wobei die ersten Eingänge der ersten und zweiten Komparatoren und die zweiten Eingänge der dritten und vierten Komparatoren mit dem Ausgang der gemeinsamen Integriereinrichtung (8) verbunden sind und die zweiten Eingänge der ersten und zweiten Komparatoren und die ersten Eingänge der dritten und vierten Komparatoren mit einer Einrichtung (13—18) zum Zuführen entsprechender Bezugspotentiale verbunden sind.

6. Anordnung nach einem der vorhergehenden Ansprüche, bei der die gemeinsame Integriereinrichtung kapazitive Einrichtungen (8) aufweist, die zwischen die Ausgänge (4, 6) der ersten (1) und zweiten (2) Erkennungseinrichtungen und einen Versorgungsanschluß geschaltet sind.

**Revendications**

1. Disposition d'identification PAL-SECAM pour un récepteur de télévision en couleurs à multistandard, comportant un premier dispositif d'identification (1) réagissant à un signal en code PAL reçu et avec une sortie (4) qui produit un signal de sortie d'un premier sens quand le dispositif de décodage de couleurs PAL est commuté dans une relation de phase voulue avec la commutation du signal en code PAL reçu et d'un second sens quand la commutation du dispositif de décodage de couleurs PAL est en phase incorrecte; un second dispositif d'identification (2) réagissant à un signal en code SECAM reçu et avec une sortie (6) qui produit un signal de sortie du second sens quand le dispositif de décodage de couleurs SECAM est commuté dans une relation de phase voulue avec la commutation du signal en code SECAM reçu et du premier sens quand la commutation du dispositif de décodage de couleurs SECAM est en phase incorrecte; caractérisée par un dispositif d'intégration commun (8) couplé avec les sorties (4,6) du premier (1) et du second (2) dispositifs d'identification et avec une sortie (7) pour produire un signal représentant la somme des signaux de sortie du premier et du second dispositifs d'identification et un dispositif de comparaison (9—12) destiné à comparer un potentiel fourni par la sortie (7) du dispositif d'intégration commun (8) avec plusieurs poten-

tiels de référence (V$_1$ à V$_5$) et pour produire des signaux de sortie indiquant la réception d'un signal en code PAL de phase correcte, pour inverser la phase de la commutation du dispositif de décodage de couleurs SECAM, pour inverser la phase de la commutation du dispositif de décodage de couleurs PAL et pour indiquer la réception d'un signal en code SECAM de phase correcte.

2. Disposition selon la revendication 1, dans laquelle le dispositif de comparaison comporte quatre comparateurs (9 à 12), destinés chacun à comparer le potentiel fourni par la sortie du dispositif d'intégration commun (8) avec un potentiel de référence respectif (V$_1$ à V$_5$) et produisant l'un respectif des signaux de sortie du dispositif de comparaison.

3. Disposition selon la revendication 1 ou 2, dans laquelle un dispositif (28) est prévu pour appliquer un potentiel de polarisation (V$_3$) à la sortie (7) du dispositif d'intégration commun (8) de manière qu'en l'absence de signaux de sortie du premier (1) et du second (2) dispositifs d'identification, aucun des quatre comparateurs (9 à 12) ne délivre de signal de sortie.

4. Disposition selon les revendications 2 et 3, dans laquelle le premier (9) et le second (10) des quatre comparateurs produisent des sorties en réponse à des excursions dans un premier sens, respectivement d'une première et d'une seconde valeurs, du potentiel délivré par le dispositif d'intégration commun, par rapport au potentiel de polarisation (V$_3$), la seconde valeur étant inférieure à la première valeur; le troisième (11) et le quatrième (12) comparateurs produisant des sorties en réponse à des excursions dans un second sens, d'une troisième et d'une quatrième valeurs respectivement, du potentiel délivré par le dispositif d'intégration commun, par rapport au potentiel de polarisation (V$_3$), la troisième valeur étant inférieure à la quatrième valeur.

5. Disposition selon l'une quelconque des revendications précédentes, dans laquelle chacun des quatre comparateurs (9 à 12) comporte une première et une seconde entrées, les premières entrées du premier et du second comparateurs et les secondes entrées du troisième et du quatrième comparateurs étant couplées avec la sortie du dispositif d'intégration commun (8), et les secondes entrées du premier et du second comparateurs et les premières entrées du troisième et du quatrième comparateurs étant couplées à un dispositif (13—18) qui fournit des potentiels respectifs de référence.

6. Disposition selon l'une quelconque des revendications précédentes, dans laquelle le dispositif d'intégration commun comporte un dispositif capacitif (8) couplé entre les sorties (4,6) du premier (1) et du second (2) dispositifs d'identification et une borne d'alimentation.

*Fig. 1*

*Fig. 2*